# EUROPÄISCHE PATENTSCHRIFT

(11) **EP 3 858 598 B1**
(45) Veröffentlichungstag und Bekanntmachung des Hinweises auf die Patenterteilung: **18.09.2024**
(21) Anmeldenummer: 20209945.3
(22) Anmeldetag: 25.11.2020
(51) Int. Cl.: B32B 5/02, B32B 7/04, B32B 15/08, B32B 27/08, B32B 27/10, B32B 27/12, B32B 27/16, B32B 27/32, B32B 29/00, B32B 38/00

(54) **NARBBAND UND VERFAHREN ZUR HERSTELLUNG DESSELBEN**
GRAINED STRIP AND METHOD FOR MANUFACTURING THE SAME
BANDE DE CICATRISATION ET SON PROCÉDÉ DE FABRICATION

(30) Priorität: 31.01.2020 DE 102020201214
(43) Veröffentlichungstag der Anmeldung: 04.08.2021
(73) Patentinhaber: Benecke-Kaliko AG, 30419 Hannover (DE)
(72) Erfinder: NEUMANN, Thorsten, 30419 Hannover (DE); KNECHT, Matthias, 30419 Hannover (DE); HÜTTNER, Gerhard, 30419 Hannover (DE)
(74) Vertreter: Continental Corporation

(56) Entgegenhaltungen:
- EP-A1- 1 538 175
- EP-A1- 1 688 460
- DE-A1- 102005 051 392
- DE-A1- 102016 225 469

## Beschreibung

Die Erfindung betrifft ein Narbband, umfassend mindestens eine Schicht aus einem thermoplastischen Olefin mit einer dreidimensional strukturierten oberseitigen Oberfläche, die zur Herstellung eines Films durch Aufbringen von flüssigem oder pastösem Kunststoff zur Ausbildung des Films im Umkehrverfahren und anschließendem Ablösen des Films von der Oberfläche bestimmt ist.

Derartige Narbbänder sind bekannt und dienen dazu, im sogenannten Umkehrverfahren einen Film oder eine Folie dadurch herzustellen, dass auf das strukturierte Narbband eine Schicht flüssigen oder pastösen Kunststoffes aufgebracht, der Kunststoff zum Aushärten gebracht und dann die Schicht als Folie abgezogen wird, wobei die Strukturierung des Narbbandes, die im Negativ vorliegt, als Positivabformung in der Oberfläche der Folie eingebracht wird. Diese Herstellung geschieht meist in einem kontinuierlichen Verfahren, wobei das Narbband entweder als endloses, von einer geeigneten Antriebseinrichtung umlaufendes Band ausgebildet ist, oder als serielles Band vorliegt, welches je nach gewünschter Narbe und Aufbau des Films in der Herstellungsanlage bereitgestellt wird.

Aus der gattungsbildenden DE 44 22 871 A1 ist es bekannt, ein solches Narbband auf Polyolefinbasis herzustellen, welches aufgrund der Rohstoffeigenschaften mit entsprechendem Kunststoff beschichtet und bei Temperaturen bis 155 °C ausgeheizt werden kann. Bei Temperaturen über 150 °C verliert jedoch das bekannte Narbband seine Struktur und insbesondere feine Strukturen in der Oberfläche schmelzen auf, die Mattierung bzw. der Glanzgrad ändern sich und beispielsweise auf einem solchen Narbband hergestellte Polyurethanbeschichtungen verlieren ihre gewünschte Struktur.

Um diesem Problem zu begegnen, werden z.B. Polyurethanbeschichtungen lediglich bis zu einer Temperatur von ca. 155 °C auf derartigen polyolefinbasierten Narbbändern ausgeführt und vom Narbband abgezogen und anschließend in einem weiteren kostenintensiven Prozess vollständig ausgeheizt, während PVC-Beschichtungen nur in sehr begrenztem Maße auf diese Weise herstellbar sind. Auch können silikonbasierte Systeme bislang auf diese Weise nicht direkt strukturiert werden, vielmehr können lediglich oberflächlich glatte Folien erzeugt werden, die in einem nachträglichen Schritt strukturiert werden müssen. DE 10 2016 225469 A1 offenbart ein Verfahren zur Herstellung einer lackierten genarbten Folie oder eines Folienlaminats mit einer lackierten genarbten Oberfolie und mit mindestens einer Unterfolie.

Alternative Konstruktionen auf Silikonbasis ermöglichen eine Strukturierung der silikonbasierten Beschichtung, jedoch nur innerhalb eines bestimmten Prozesszeitfensters. Außerhalb dieses Zeitfensters ist die Struktureinbringung bislang nur bedingt bis unzureichend möglich.

Darüber hinaus sind die bekannten Narbbänder an ihrer Oberfläche unmodifiziert, wodurch die Haftung zwischen dem Narbband und dem Beschichtungsmedium nur durch das aufgetragene Beschichtungsmedium selbst bestimmt wird. Ist das Oberflächen-Flächenverhältnis zu hoch, beispielsweise bei einer sehr tiefen Narbstruktur, führt dies zu einer äußerst hohen Haftung auf dem Narbband, wodurch immer wieder Rückstände auf dem Narbband verbleiben, die aufwendig abgereinigt werden müssen.

Beschichtungssysteme auf Basis von peroxidvernetzendem Silikon bieten zwar die Möglichkeit, ein Narbband bei einer Temperatur zwischen Raumtemperatur und bis zu 120 °C auf einem Kalander unstrukturiert herzustellen und anschließend in einem Strukturier- und Ausheizschritt oberhalb von 150 °C zu vernetzen, jedoch tritt hierbei eine unerwünschte Geruchsbelastung aufgrund des entsprechenden Peroxidvernetzers auf das finale Narbband auf. Alternative Möglichkeiten bieten sich durch Einsatz von Polymethylpenten (PMP), beispielsweise TPX, einem teilkristallinen Thermoplast, welches zur Gruppe der (modifizierten) Polyolefine gehört und bei höheren Temperaturen einsetzbar ist. Dies gilt ebenso für elastomerbasierte Systeme, wie Gummi.

Die einzige im Stand der Technik bislang etablierte Vorgehensweise zur Herstellung von Filmen oder Folien im Umkehrverfahren bei Temperaturen über 155 °C ist die Verwendung von Papierbändern als Narbband, in die ein reliefartiges Muster eingeprägt ist, dass sich bis auf die Rückseite des Papiers erstreckt, sodass sich im Querschnitt eine gewellte Feinstruktur entsprechend der Prägung ergibt. Ein solches Papierband ist zwar einfach und preisgünstig herzustellen, weist jedoch nur geringe Reißfestigkeit auf, sodass es relativ kurzfristig verschleißt und nur geringe Verwendungsanzahlen erlaubt. Darüber hinaus ist es schwierig bis unmöglich, in ein solches Papierband eine tiefe Strukturierung einzubringen.

Die DE 10 2016 225 469 A1 und die EP 1 688 460 A1 offenbaren Verfahren zur Herstellung einer lackierten genarbten Folie, die in einem Prägeschritt genarbt und anschließend mit Elektronenstrahlen behandelt wird. Die Herstellung von Narbbändern mit einer Oberfläche, die eine Beschichtung mit flüssigem oder pastösen Kunststoff zur Ausbildung eines Films im Umkehrverfahren und anschließendem Ablösen des Filmes gestattet, ist in diesen Druckschriften allerdings nicht angesprochen.

Ferner offenbaren die DE 10 2005 051 392 A1 und die EP 1 538 175 jeweils die Herstellung genarbter Kunststoff-Formteile, die mit Elektronenstrahlen behandelt werden. Auch in diesen Druckschriften wird die Herstellung von Narbbändern mit einer Oberfläche, die eine Beschichtung mit flüssigem oder pastösen Kunststoff zur Ausbildung eines Films im Umkehrverfahren und anschließendem Ablösen des Filmes gestattet, nicht angesprochen.

Aufgabe der Erfindung ist es daher, ein Narbband der eingangs genannten Art sowie ein Verfahren zur Herstellung desselben vorzuschlagen, welches bei den unterschiedlichsten Polymersystemen und Verarbeitungstemperaturen eingesetzt werden und die bisher verwendeten Papier-Narbbänder ersetzen kann und hochtemperaturfest ist sowie unter Vermeidung von Geruchsemissionen hergestellt werden kann.

Zur Lösung der gestellten Aufgabe wird erfindungsgemäß die Ausgestaltung eines Narbbandes gemäß den Merkmalen des Patentanspruches 1 vorgeschlagen.

Ein Verfahren zur Herstellung eines solchen Narbbandes ist Gegenstand des Patentanspruches 12.

Vorteilhafte Ausgestaltungen und Weiterbildungen der Erfindung sind Gegenstand der abhängigen Ansprüche.

Der erfindungsgemäße Vorschlag sieht vor, dass die mindestens eine Schicht elektronenstrahlvernetzt ist und die oberseitige Oberfläche von einer Lackschicht gebildet ist, auf die im Anschluss an die Herstellung des Narbbandes der flüssige oder pastöse Kunststoff aufbringbar ist.

Durch die erfindungsgemäß vorgesehene Vernetzung der mindestens einen Schicht mit Elektronenstrahlen wird eine bislang nicht erreichbare Temperaturbeständigkeit des zur Herstellung der mindestens einen Schicht verwendeten thermoplastischen Olefins erreicht, die bei Langzeitanwendung bis zu 210 °C betragen kann. Vor dem Vernetzen kann die gewünschte dreidimensionale Struktur, beispielsweise eine Ledernarbung, eingebracht werden, wobei die die spätere Oberfläche ausbildende Lackbeschichtung sowohl vor als auch nach dem Einbringen der dreidimensionalen Strukturierung, jedoch vor dem Vernetzen aufgebracht wird.

Nach einem Vorschlag der Erfindung werden als thermoplastisches Olefin zur Ausbildung der mindestens einen Schicht Polymere auf Basis von Ethylen, Propylen, Ethylen-Propylen-Copolymeren, Pfropfcopolymeren und/oder Terpolymeren eingesetzt.

Alternativ kann die mindestens eine Schicht auch aus einer Streichbeschichtung enthaltend eine Dispersion des thermoplastischen Olefins sowie bis zu 50 Gewichtsprozent einer Polyurethandispersion gebildet werden, die auf eine glatte Unterlage, beispielsweise auf Papier gestrichen wird, um eine entsprechende Folie zu erhalten. Durch dieses Verfahren lassen sich dünnere Schichten erzielen.

Nach einem weiteren Vorschlag der Erfindung enthält die mindestens eine Schicht zur Verbesserung der Vernetzungseigenschaften mittels Elektronenstrahlen geeignete Vernetzungshilfsmittel.

Als Vernetzungshilfsmittel können nach einem weiteren Vorschlag der Erfindung Polybutadien, unmodifizierte und/oder modifizierte Acrylatverbindungen, Allylverbindungen und/oder Silane vorgesehen werden. Beispiele der Vernetzungshilfsmittel umfassen mono-, di- und trifunktionelle Acrylate, Polybutadien, Triallylcyanurat (TAC) und Triallylisocyanurat (TAIC).

Nach einem weiteren Vorschlag der Erfindung kann die Rohstoffmischung zur Herstellung der mindestens einen Schicht Füllstoffe, wie Kreiden oder Tonerden, Flammschutzmittel, Thermoleitfähigkeitsadditive wie beispielsweise Siliziumcarbide, Diamantpulver, Bornitrit, Silber als Element oder gebunden, Aluminiumoxide oder Kupferpartikel, Gleitmittel, externe und interne Stabilisatoren gegen Wärmebeeinflussung, Flussmittel, Pigmente und/oder Farbstoffe, Treibmittel und Schlagzähmodifier umfassen. Als Pigmente können auch thermochrome Pigmente verwendet werden, so dass es ermöglicht wird, die Temperaturprofile in den entsprechenden Temperaturfenstern zu erkennen.

Zur Anpassung der Oberflächenenergie bzw. des Haftverhaltens der Oberfläche des erfindungsgemäßen Nachbandes wird dieses erfindungsgemäß mit einer Lackbeschichtung versehen, die sodann die Oberfläche ausbildet, auf welcher später bei Einsatz des Narbbandes der flüssige oder pastöse Kunststoff zur Ausbildung des Films aufgetragen und anschließend abgelöst wird. Bevorzugt ist diese Lackbeschichtung aus einem thermisch stabilen und idealerweise duromeren Lack gebildet, wobei neben wasser- und lösemittelbasierten Lacksystemen mit entsprechenden Isocyanaten, Carbodiimiden, Melaminen und Azeridinen vorzugsweise UV-vernetzende und insbesondere vollständig vernetzende Systeme sowie gegebenenfalls wasserbasierte Systeme verwendet werden. Diese Lacksysteme weisen eine höhere Temperaturstabilität auf und erlauben aufgrund ihrer Radikalvernetzung eine kovalente Anbindung an nicht modifizierte Polyolefinoberflächen.

Die Lackbeschichtung wird entweder gemeinsam mit der mindestens einen Schicht während der Einwirkung der Elektronenstrahlen vernetzt oder gesondert unmittelbar nach dem Aufbringen der Lackbeschichtung vernetzt.

Ferner kann nach einem weiteren Vorschlag der Erfindung dieses Lacksystem zur Ausbildung der Lackbeschichtung mit entsprechenden Mattierungsmitteln, Silikonölen, Acrylaten, Polyurethanen und fluoridbasierten Komponenten gemischt werden sowie gegebenenfalls Wärmestabilisatoren enthalten.

Die mindestens eine Schicht des erfindungsgemäßen Narbbandes kann beispielsweise in an sich bekannter Weise in einem Kalander oder Extruder hergestellt werden, wobei erfindungsgemäß auch mehrere, insbesondere zwei bis vier Schichten aus thermoplastischem und elektronenstrahlvernetztem Olefin zur Ausbildung des erfindungsgemäßen Narbbandes aufeinanderliegend vorgesehen sein können. Vorzugsweise werden ein bis zwei Schichten verwendet, die zum einen eine gute Prägbarkeit und Narbabbildgenauigkeit erfüllen, zum anderen aber auch über eine gute Wärmeaufnahme und Wärmeleitfähigkeit bei gleichzeitig geringer Wärmekapazität verfügen.

Beispielsweise wird eine Kalanderapplikation bei Temperaturen von 120 °C bis 220 °C, vorzugsweise bei 150 °C bis 200 °C durchgeführt, wobei ein stabiler Film erhalten wird.

Nach einem weiteren Vorschlag wird die der Lackbeschichtung abgewandte Unterseite des erfindungsgemäßen Narbbandes haftfest mit einem Trägersubstrat verbunden, welches dem Narbband beispielsweise geringe Streckbarkeit bzw. Dehnbarkeit, hohe Temperaturfestigkeit und eine homogene Dickenverteilung verleiht sowie die Stabilität über die Breite ermöglicht.

Als Trägersubstrat sind insbesondere textile Flächengebilde, zum Beispiel Vliese, die gegebenenfalls auch wasserstrahlverfestigt sein können, Gestricke und Gewirke vorgesehen. Das aus einem textilen Flächengebilde hergestellte Trägersubstrat kann auf Basis von Glasfasern, Carbonfasern, Mineralfasern, Baumwolle, Viskose, Polyamid, Polyester oder Aramidfasern oder Abmischungen derselben ausgebildet sein. Neben textilen Trägern können auch Metallfolien, Papier- oder Metallbänder verwendet werden.

Nach einem weiteren Vorschlag der Erfindung wird das Trägersubstrat mittels eines geeigneten Klebstoffes haftfest mit der unterseitigen Oberfläche verbunden, wozu beispielsweise Zweikomponentenklebstoffe auf Basis von Polyurethanen, Epoxidharzen, Acrylaten oder modifizierten Silikonen als geeignet angesehen werden.

Zur Haftungsverbesserung kann die mit dem Trägersubstrat haftfest zu verbindende unterseitige Oberfläche der mindestens einen Schicht auch durch eine Plasma- oder Coronabehandlung mittels Sauerstoff und unter eventueller Einwirkung von Feuchtigkeit dahingehend modifiziert werden, dass reaktive Gruppen an der Oberfläche entstehen, welche mit entsprechenden Klebstoffen bzw. Vernetzern zur Reaktion gebracht werden können.

Ein Verfahren zur Herstellung eines Narbbandes der vorangehend erläuterten Art umfasst die Schritte:
a) Herstellung einer Folie mit mindestens einer Schicht aus einem thermoplastischen Olefin, ggf. enthaltend Vernetzungshilfsmittel;
b) Aufbringen einer Lackbeschichtung auf die hergestellte Folie;
c) dreidimensionales Strukturieren zumindest der auf die Folie aufgebrachten Lackbeschichtung;
d) Vernetzen der mindestens einen Schicht der Folie sowie gegebenenfalls der Lackbeschichtung durch Einwirkung von Elektronenstrahlen.

Die Prägung bzw. Strukturierung der gegebenenfalls mit einem Trägersubstrat kaschierten und auf der gegenüberliegenden Seite mit der Lackbeschichtung versehenen Polyolefinfolie wird in einem Temperaturbereich zwischen 120 und 290 °C, vorzugsweise bei 180 bis 260 °C durch Verwenden von Prägewerkzeugen, wie Vakuumprägewalzen, Silikonprägewalzen oder Stahlprägewalzen erreicht. Nach dem Prägeschritt erfolgt der Vernetzungsschritt mittels Elektronenstrahlen.

Die Vernetzung erfolgt rohstoffabhängig bei etwa 1 bis 400 Kilogray [kGy], vorzugsweise bei etwa 10 bis 100 kGy. Durch Einstellung der angelegten Spannung kann die Elektronengeschwindigkeit, mit der die mindestens eine Schicht durchdrungen wird, eingestellt werden, wozu üblicherweise etwa 650 bis 950 kV in Abhängigkeit von der Schichtdicke angelegt werden, um eine vollständige Durchdringung sicherzustellen.

Die Kaschierung der mindestens einen Schicht des erfindungsgemäßen Narbbandes mit einem Trägersubstrat kann zu verschiedenen Zeitpunkten erfolgen. Generell stehen insbesondere bei der Herstellung der mindestens einen Schicht in einem Kalander oder Extruder folgende Verfahrensschrittabfolgen zur Verfügung:
Version A:
   1. Folie mit mindestens einer Schicht erstellen;
   2. Aufbringen der Lackbeschichtung und ggf. Vernetzen derselben;
   3. Prägen der Folie;
   4. Vernetzen der Folie;
   5. Kaschieren der Folie mit entsprechendem Trägersubstrat.
Version B:
   1. Folie mit mindestens einer Schicht erstellen;
   2. Kaschieren der Folie mit entsprechendem Trägersubstrat;
   3. Aufbringen der Lackbeschichtung und ggf. Vernetzen derselben;
   4. Prägen der Folie;
   5. Vernetzen der Folie.
Version C:
   1. Folie mit mindestens einer Schicht erstellen;
   2. Aufbringen der Lackbeschichtung und ggf. Vernetzen derselben;
   3. Kaschieren der Folie mit entsprechendem Trägersubstrat;
   4. Prägen der Folie;
   5. Vernetzen der Folie.

Die Erfindung wird nachfolgend anhand von Ausführungsbeispielen in der Zeichnung in weiteren Details erläutert. Es zeigen:
- Figur 1: in schematisierter Darstellung einen Querschnitt durch eine erste Ausführungsform eines erfindungsgemäßen Narbbandes;
- Figur 2: in schematisierter Darstellung einen Querschnitt durch eine zweite Ausführungsform eines erfindungsgemäßen Narbbandes.

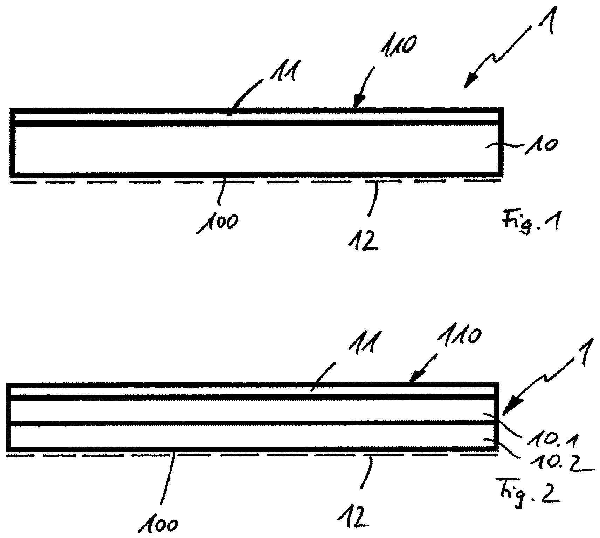

Aus den Figuren 1 und 2 sind Querschnitte von Narbbändern ersichtlich, wie sie zum Beispiel zur Herstellung von Polyurethanbeschichtungen im Umkehrverfahren Verwendung finden.

Das global mit Bezugszeichen 1 gekennzeichnete Narbband gemäß Figur 1 umfasst eine Schicht 10 aus einem thermoplastischen Olefin, beispielsweise einem Polyolefin, die geeignete Vernetzungshilfsmittel enthält, etwa Polybutadien.

Sofern die Schicht 10 durch Streichen einer Polyolefindispersion in Abmischung mit einer Polyurethandispersion von bis zu 50 Gewichtsprozent auf einer Papierunterlage hergestellt worden ist, kann die Dicke etwa 50 bis 500 µm betragen.

Alternativ kann die Schicht 10 aber auch durch Kalandrieren oder Extrudieren hergestellt sein, wobei mittels Kalandrieren Schichtdicken von etwa 150 bis 2000 µm und mittels Extrudieren von etwa 75 bis 3000 µm erzeugt werden können.

Auf die Oberseite der Schicht 10 ist eine Lackbeschichtung 11 im Ein- oder Mehrwalzenauftrag mit einem beispielhaften trockenen Flächengewicht von 2 bis 30 g/m² aufgebracht, die zugleich die spätere Oberfläche 110 des Narbbandes 1 ausbildet, auf welchem der Film im Umkehrverfahren aufgebracht und abgelöst wird.

Die Oberfläche 110 ist dreidimensional strukturiert, zum Beispiel nach Art einer Ledernarbe, die durch Einwirkung entsprechender Prägewalzen zumindest in die Lackbeschichtung 11 sowie gegebenenfalls auch die darunter befindliche Schicht 10 eingebracht worden ist. Die Prägungstiefe kann zwischen 0 und 1500 µm, vorzugsweise zwischen 0 und 800 µm liegen.

Auf der der Lackbeschichtung 11 abgewandten Unterseite 100 ist die Schicht 10 durch einen beispielsweise mit einem trockenen Flächengewicht von 20 bis 250 g/m² aufgebrachten Kaschierkleber mit einem Trägersubstrat 12, beispielsweise einem wasserstrahlverfestigten Vlies mit einem Flächengewicht von 25 bis 800 g/m² haftfest verbunden.

Die alternative Ausgestaltung gemäß Figur 2 unterscheidet sich von der Ausgestaltung gemäß Figur 1 dadurch, dass anstelle lediglich einer Schicht 10 aus thermoplastischem Polyolefin in Figur 1 in der Darstellung gemäß Figur 2 eine Folie vorgesehen ist, die zwei diskret aufeinanderliegende Schichten 10.1, 10.2 des thermoplastischen Polyolefins umfasst. Der weitere Aufbau entspricht demjenigen der Figur 1, sodass zur Vermeidung von Wiederholungen auf entsprechende Erläuterungen verzichtet werden kann.

Sowohl im Ausführungsbeispiel nach Figur 1 als auch im Ausführungsbeispiel nach Figur 2 wird die Oberfläche 110 zumindest im Bereich der Lackbeschichtung 11 dreidimensional strukturiert und anschließend der Einwirkung von Elektronenstrahlen ausgesetzt, die durch Anlage eines Potenzials zwischen 650 und 950 kV erzeugt werden, sodass vorzugsweise etwa 10 bis 100 kGy absorbiert werden.

Infolge der in die mindestens eine Schicht 10, 10.1, 10.2 aus thermoplastischem Olefin eingebrachten Vernetzungshilfsmittel wird insoweit eine Elektronenstrahlvernetzung dieser Schichten 10, 10.1, 10.2 sowie gegebenenfalls auch der Lackbeschichtung 11 bewirkt, die zum Aushärten der bestrahlten Schichten führt und diesen eine überragende Temperaturbeständigkeit bis 210 °C unter Langzeitbelastung verleiht.

Im Ergebnis wird ein auf thermoplastischem Olefin basierendes Narbband mit hoher Verschleißfestigkeit erhalten, welches beispielsweise bei Polyurethanbeschichtungen bis zu 400 Ofendurchgänge in Abhängigkeit von der angelegten Temperatur und Zugkraft problemlos übersteht.

Das erfindungsgemäße Narbband lässt sich einfach und rationell herstellen und ist mit gegebenenfalls vorhandenen Prägewalzen unmittelbar strukturierbar, wobei gewünschte haptische Eigenschaften gezielt einstellbar sind und schädliche Emissionen weitgehend vermieden werden.

Das erfindungsgemäße Narbband kann insbesondere bei der Herstellung von Beschichtungen auf Basis von Polyolefinen, Silikonen, PVC und Polyurethanen sowie auch zur Herstellung prägbarer Silikonkunstleder Verwendung finden, welche aus Silikon allein oder in Abmischung mit Standardpolymeren, wie PVC, Polyolefinen, Zellstoffen, Polyurethanen, Polyamiden oder vergleichbaren Systemen aufgebaut sind.

### Bezugszeichenliste:

- 1: Narbband
- 10, 10.1, 10.2: Schicht
- 11: Lackbeschichtung
- 12: Trägersubstrat
- 100: Unterseite
- 110: Oberfläche

## Patentansprüche

1. Narbband (1), umfassend mindestens eine Schicht (10, 10.1, 10.2) aus einem thermoplastischen Olefin mit einer dreidimensional strukturierten oberseitigen Oberfläche (110), die zur Herstellung eines Films durch Aufbringen von flüssigem oder pastösem Kunststoff zur Ausbildung des Films im Umkehrverfahren und anschließendem Ablösen des Films von der Oberfläche bestimmt ist,
**dadurch gekennzeichnet, dass** die mindestens eine Schicht (10, 10.1, 10.2) elektronenstrahlvernetzt ist und die oberseitige Oberfläche (110) von einer Lackbeschichtung (11) gebildet ist, auf die der flüssige oder pastöse Kunststoff aufbringbar ist.

2. Narbband (1) nach Anspruch 1, **dadurch gekennzeichnet, dass** als thermoplastisches Olefin zur Ausbildung der mindestens einen Schicht (10, 10.1, 10.2) Polymere auf Basis von Ethylen, Propylen, Ethylen-Propylen-Copolymeren, Pfropfcopolymeren und/oder Terpolymeren eingesetzt sind.

3. Narbband (1) nach Anspruch 1 oder 2, **dadurch gekennzeichnet, dass** die mindestens eine Schicht (10, 10.1, 10.2) aus einer Streichbeschichtung enthaltend eine Dispersion des thermoplastischen Olefins sowie bis zu 50 Gew.-% einer Polyurethandispersion gebildet ist.

4. Narbband (1) nach einem der Ansprüche 1 bis 3, **dadurch**
**gekennzeichnet, dass** die mindestens eine Schicht (10, 10.1, 10.2) Vernetzungshilfsmittel enthält.

5. Narbband (1) nach Anspruch 4, **dadurch gekennzeichnet, dass** als Vernetzungshilfsmittel Polybutadiene, unmodifizierte und/oder modifizierte Acrylatverbindungen, Allylverbindungen und/oder Silane vorgesehen sind.

6. Narbband (1) nach einem der Ansprüche 1 bis 5, **dadurch**
**gekennzeichnet, dass** das thermoplastische Olefin Füllstoffe, Flammschutzmittel, Thermoleitfähigkeitsadditive, Gleitmittel, Stabilisatoren, Flussmittel, Pigmente, Farbstoffe, Treibmittel und/oder Schlagzähmodifier enthält.

7. Narbband (1) nach einem der Ansprüche 1 bis 6, **dadurch**
**gekennzeichnet, dass** die Lackbeschichtung (11) auf Basis eines thermostabilen wasser- oder lösemittelbasierten und/oder UV-vernetzenden Lacksystems ausgebildet ist.

8. Narbband (1) nach einem der Ansprüche 1 bis 7, **dadurch**
**gekennzeichnet, dass** die Lackbeschichtung (11) Mattierungsmittel, Silikone, Acrylate Polyurethane und/oder fluoridbasierte Komponenten sowie Wärmestabilisatoren enthält.

9. Narbband (1) nach einem der Ansprüche 1 bis 8, **dadurch**
**gekennzeichnet, dass** es zwei bis vier Schichten (10, 10.1, 10.2) aus thermoplastischem und elektronenstrahlvernetztem Olefin umfasst.

10. Narbband (1) nach einem der Ansprüche 1 bis 9, **dadurch gekennzeichnet, dass** die der Lackbeschichtung (11) abgewandte Unterseite (100) haftfest mit einem Trägersubstrat (12) verbunden ist.

11. Narbband (1) nach Anspruch 10, **dadurch gekennzeichnet, dass** das Trägersubstrat (12) von einem textilen Flächengebilde, einer Metallfolie, einem Papier- oder Metallband gebildet ist.

12. Narbband (1) nach einem der Ansprüche 10 oder 11, **dadurch gekennzeichnet, dass** das Trägersubstrat (12) mittels eines Klebstoffes haftfest mit der unterseitigen Oberfläche (100) verbunden ist.

13. Verfahren zur Herstellung eines Narbbandes (1) nach einem der vorangehenden Ansprüche, umfassend die Schritte:
a) Herstellung einer Folie mit mindestens einer Schicht (10, 10.1, 10.2) aus einem thermoplastischen Olefin;
b) Aufbringen einer Lackbeschichtung (11) auf die hergestellte Folie;
c) dreidimensionales Strukturieren zumindest der auf die Folie aufgebrachten Lackbeschichtung (11);
d) Vernetzen der mindestens einen Schicht (10, 10.1, 10.2) der Folie durch Einwirkung von Elektronenstrahlen.

14. Verfahren nach Anspruch 13, **dadurch gekennzeichnet, dass** die mindestens einschichtige Folie mittels Kalander oder Extrusion oder durch Streichen einer Olefindispersion, enthaltend bis zu 50 Gew.-% einer Polyurethandispersion auf eine glatte Unterlage hergestellt wird.

15. Verfahren nach Anspruch 13 oder 14, **dadurch gekennzeichnet, dass** die hergestellte Folie vor dem Vernetzen in Schritt d) an der der Lackbeschichtung (11) abgewandten Unterseite (100) mit einem Trägersubstrat (12) haftfest verbunden wird.

16. Verfahren nach einem der Ansprüche 13 bis 15, **dadurch**
**gekennzeichnet, dass** die dreidimensionale Strukturierung im Schritt c) mittels Prägewalzen bei einer Temperatur von 120 bis 290 °C bewirkt wird.

## Claims

1. Grain tape (1) comprising at least one layer (10, 10.1, 10.2) formed from a thermoplastic olefin having a three-dimensionally structured top surface (110), intended for production of a film by application of plastic in liquid or paste form for formation of the film by the inversion method and subsequent detachment of the film from the surface, **characterized in that** the at least one layer (10, 10.1, 10.2) has been electron beam-crosslinked and the top surface (110) is formed by a varnish coating (11) to which the plastic in liquid or paste form is applicable.

2. Grain tape (1) according to Claim 1, **characterized in that** the thermoplastic olefin used to form the at least one layer (10, 10.1, 10.2) is polymers based on ethylene, propylene, ethylene-propylene copolymers, graft copolymers and/or terpolymers.

3. Grain tape (1) according to Claim 1 or 2, **characterized in that** the at least one layer (10, 10.1, 10.2) has been formed from a spreadable coating comprising a dispersion of the thermoplastic olefin and up to 50% by weight of a polyurethane dispersion.

4. Grain tape (1) according to any of Claims 1 to 3, **characterized in that** the at least one layer (10, 10.1, 10.2) contains crosslinking aids.

5. Grain tape (1) according to Claim 4, **characterized in that** the crosslinking aids present are polybutadienes, unmodified and/or modified acrylate compounds, allyl compounds and/or silanes.

6. Grain tape (1) according to any of Claims 1 to 5, **characterized in that** the thermoplastic olefin contains fillers, flame retardants, thermal conductivity additives, lubricants, stabilizers, flow agents, pigments, dyes, blowing agents and/or impact modifiers.

7. Grain tape (1) according to any of Claims 1 to 6, **characterized in that** the varnish coating (11) is based on a thermally stable water- or solvent-based and/or UV-crosslinking varnish system.

8. Grain tape (1) according to any of Claims 1 to 7, **characterized in that** the varnish coating (11) contains flatting agents, silicones, acrylates, polyurethanes and/or fluoride-based components, and thermal stabilizers.

9. Grain tape (1) according to any of Claims 1 to 8, **characterized in that** it comprises two to four layers (10, 10.1, 10.2) of thermoplastic and electron beam-crosslinked olefin.

10. Grain tape (1) according to any of Claims 1 to 9, **characterized in that** the bottom side (100) remote from the varnish coating (11) is firmly bonded to a carrier substrate (12).

11. Grain tape (1) according to Claim 10, **characterized in that** the carrier substrate (12) is formed by a textile fabric, a metal foil or a paper or metal strip.

12. Grain tape (1) according to either of Claims 10 and 11, **characterized in that** the carrier substrate (12) is firmly bonded to the bottom surface (100) by means of an adhesive.

13. Method of producing a grain tape (1) according to any of the preceding claims, comprising the steps of:
a) producing a film having at least one layer (10, 10.1, 10.2) of a thermoplastic olefin;
b) applying a varnish coating (11) to the film produced;
c) three-dimensionally structuring at least the varnish coating (11) applied to the film;
d) crosslinking the at least one layer (10, 10.1, 10.2) of the film by the action of electron beams.

14. Method according to Claim 13, **characterized in that** the at least one-layer film is produced by calendering or extrusion or by spreading an olefin dispersion containing up to 50% by weight of a polyurethane dispersion onto a smooth substrate.

15. Method according to Claim 13 or 14, **characterized in that** the film produced, prior to the crosslinking in step d), is firmly bonded to a carrier substrate (12) on the bottom side (100) opposite the varnish coating (11).

16. Method according to any of Claims 13 to 15, **characterized in that** the three-dimensional structuring in step c) is brought about by roll embossing at a temperature of 120 to 290°C.

## Revendications

1. Ruban de cicatrisation (1), comprenant au moins une couche (10, 10.1, 10.2) en une oléfine thermoplastique présentant une surface supérieure (110) structurée de manière tridimensionnelle, qui est destinée à la fabrication d'un film par application d'un matériau synthétique liquide ou pâteux pour la formation du film dans le procédé d'inversion et détachement consécutif du film de la surface, **caractérisé en ce que** ladite au moins une couche (10, 10.1, 10.2) est réticulée par un rayonnement électronique et la surface supérieure (110) est formée par un revêtement de laque (11) qui peut être appliqué sur le matériau synthétique liquide ou pâteux.

2. Ruban de cicatrisation (1) selon la revendication 1, **caractérisé en ce qu'**on utilise, comme oléfine thermoplastique pour la formation de ladite au moins une couche (10, 10.1, 10.2), des polymères à base d'éthylène, de propylène, de copolymères d'éthylène-propylène, de copolymères greffés et/ou de terpolymères.

3. Ruban de cicatrisation (1) selon la revendication 1 ou 2, **caractérisé en ce que** ladite au moins une couche (10, 10.1, 10.2) est formée à partir d'un revêtement d'enduction contenant une dispersion de l'oléfine thermoplastique ainsi qu'à raison de jusqu'à 50% en poids d'une dispersion de polyuréthane.

4. Ruban de cicatrisation (1) selon l'une des revendications 1 à 3, **caractérisé en ce que** ladite au moins une couche (10, 10.1, 10.2) contient des adjuvants de réticulation.

5. Ruban de cicatrisation (1) selon la revendication 4, **caractérisé en ce qu'**on a prévu, comme adjuvants de réticulation, des polybutadiènes, des composés d'acrylate non modifiés et/ou modifiés, des composant d'allyle et/ou des silanes.

6. Ruban de cicatrisation (1) selon l'une des revendications 1 à 5, **caractérisé en ce que** l'oléfine thermoplastique contient des charges, des agents ignifuges, des additifs de thermoconductibilité, des lubrifiants, des stabilisants, des fondants, des pigments, des colorants, des agents gonflants et/ou des modificateurs choc.

7. Ruban de cicatrisation (1) selon l'une des revendications 1 à 6, **caractérisé en ce que** le revêtement de laque (11) est formé sur la base d'un système de laque thermostable, à base d'eau ou de solvant et/ou réticulant par UV.

8. Ruban de cicatrisation (1) selon l'une des revendications 1 à 7, **caractérisé en ce que** le revêtement de laque (11) contient des agents de matage, des silicones, des acrylates-polyuréthanes et/ou des composants à base de fluorure ainsi que des stabilisants thermiques.

9. Ruban de cicatrisation (1) selon l'une des revendications 1 à 8, **caractérisé en ce qu'**il comprend deux à quatre couches (10, 10.1, 10.2) en une oléfine thermoplastique et réticulée par un rayonnement électronique.

10. Ruban de cicatrisation (1) selon l'une des revendications 1 à 9, **caractérisé en ce que** la face inférieure (100) opposée au revêtement de laque (11) est reliée de manière autoadhésive à un substrat support (12).

11. Ruban de cicatrisation (1) selon la revendication 10, **caractérisé en ce que** le substrat support (12) est formé par une structure plane textile, une feuille métallique, un ruban en papier ou métallique.

12. Ruban de cicatrisation (1) selon l'une des revendications 10 ou 11, **caractérisé en ce que** le substrat support (12) est relié à la surface inférieure (100) de manière autoadhésive à l'aide d'un adhésif.

13. Procédé de fabrication d'un ruban de cicatrisation (1) selon l'une des revendications précédentes, comprenant les étapes de :
a) fabrication d'une feuille présentant au moins une couche (10, 10.1, 10.2) en une oléfine thermoplastique ;
b) application d'un revêtement de laque (11) sur la feuille fabriquée ;
c) structuration tridimensionnelle au moins du revêtement de laque (11) appliqué sur la feuille ;
d) réticulation de ladite au moins une couche (10, 10.1, 10.2) de la feuille par action de rayons électroniques.

14. Procédé selon la revendication 13, **caractérisé en ce que** ladite au moins une feuille monocouche est fabriquée par calandrage ou extrusion ou par enduction d'une dispersion oléfinique, contenant jusqu'à 50% en poids d'une dispersion d'uréthane sur une sous-couche lisse.

15. Procédé selon la revendication 13 ou 14, **caractérisé en ce que** la feuille fabriquée est reliée de manière autoadhésive à un substrat support (12) sur la face inférieure (100) opposée au revêtement de laque (11) avant la réticulation dans l'étape d) .

16. Procédé selon l'une des revendications 13 à 15, **caractérisé en ce que** la structuration tridimensionnelle dans l'étape c) est provoquée au moyen de cylindres de gaufrage à une température de 120 à 290°C.
